Europäisches Patentamt

European Patent Office

Office européen des brevets

(19)

(11) **EP 1 343 358 A1**

(12) # DEMANDE DE BREVET EUROPEEN

(43) Date de publication:
**10.09.2003 Bulletin 2003/37**

(51) Int Cl.[7]: **H05B 41/282**

(21) Numéro de dépôt: **02447034.6**

(22) Date de dépôt: **05.03.2002**

| | |
|---|---|
| (84) Etats contractants désignés:<br>**AT BE CH CY DE DK ES FI FR GB GR IE IT LI LU MC NL PT SE TR**<br>Etats d'extension désignés:<br>**AL LT LV MK RO SI**<br><br>(71) Demandeur: **Ghys, Jean-Claude**<br>**4020 Liège (BE)** | (72) Inventeur: **Ghys, Jean-Claude**<br>**4020 Liège (BE)**<br><br>(74) Mandataire: **Van Malderen, Michel et al**<br>**Office van Malderen**<br>**85/043 Boulevard de la Sauvenière**<br>**4000 Liège (BE)** |

(54) **Convertisseur à fréquence constante**

(57)   La présente invention se rapporte à un procédé pour la mise en oeuvre comme circuit correcteur de charge d'un convertisseur résonnant série-parallèle LCC comprenant une source de tension alternative ($V_{AC}$) de haute fréquence variable, dite fréquence de travail ($f_3$), une inductance (L) et une capacité ($C_1$) en série sur une charge essentiellement résistive (R) et une capacité ($C_2$) en parallèle sur ladite charge, caractérisé en ce que la fréquence de travail ($f_3$) est choisie de manière telle que l'impédance d'entrée ($Z_{IN}$) vue par la source de tension est constante, quelle que soit la valeur de la charge (R).

Fig. 3

## Description

### <u>Objet de l'invention</u>

La présente invention se rapporte à un nouveau procédé de mise en oeuvre comme correcteur de charge d'un convertisseur série-parallèle LCC utilisé de telle manière que le courant dans la charge apparaisse comme approximativement constant, vu de la source de tension.

La présente invention se rapporte plus particulièrement à l'utilisation dudit correcteur de charge comme ballast pour tubes à décharge électroluminescents (TL).

### <u>Arrière-plan technologique et état de la technique</u>

La plupart des concepteurs de ballasts donnent actuellement la préférence à des topologies en demi-pont, moins coûteuses et moins complexes.

Le concept de circuit de charge est basé sur un réseau résonnant travaillant généralement à une fréquence comprise entre 25 et 100 kHz.

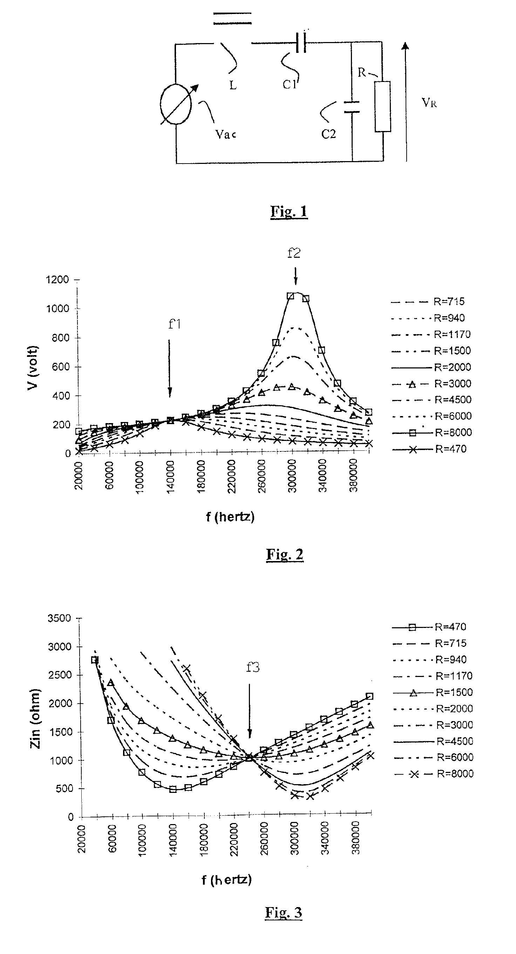

On connaît un convertisseur tel que celui décrit à la figure 1, dit LCC, alimenté par une source de tension AC, comprenant, dans sa forme la plus simple, un circuit oscillant LC série composé d'une inductance L et d'un condensateur $C_1$, lui-même en série avec une charge essentiellement résistive R (la lampe) en parallèle sur un second condensateur $C_2$.

La capacité $C_1$ sert à bloquer la composante DC du courant de charge. L'inductance L sert à limiter le courant dans la lampe.

Ce circuit de charge résonnant se caractérise par une courbe de gain G = $V_R/V_{AC}$ telle que représentée sur la figure 2, $V_{AC}$ et $V_R$ étant respectivement la tension aux bornes de la source AC et de la charge R. Le circuit série-parallèle tel que susmentionné se caractérise par deux fréquences particulières de fonctionnement. La première,

$$f_1 = \frac{1}{2\pi\sqrt{LC_1}} \tag{EQ.1}$$

correspond à la fréquence de résonance du circuit série constitué par L et $C_1$ (c'est-à-dire en supposant une charge en court-circuit R = 0 - haut courant). La seconde,

$$f_2 = \frac{1}{2\pi\sqrt{L\dfrac{C_1 C_2}{C_1+C_2}}} \tag{EQ.2}$$

correspond à la fréquence de résonance du circuit série constitué par L, $C_1$ et $C_2$ (c'est-à-dire en supposant une charge "ouverte" R = ∞ - haute tension).

La fréquence de travail utilisée est généralement légèrement supérieure à $f_2$. En effet, au-dessus de cette fréquence, le circuit a une caractéristique selfique. Dès lors, les transistors du convertisseur peuvent commuter à l'amorçage sans aucune perte de commutation, ce qui est particulièrement avantageux dans le cas des transistors de type MOSFET présentant une forte capacité parasite. Par contre, le fait que la charge soit inductive présente comme inconvénient de s'éloigner d'une forme d'onde sinusoïdale pure. Le facteur de forme est donc élevé (1,65 - 1,7), à la limite tolérée pour la garantie de durée de vie des tubes électroluminescents.

Dans les convertisseurs, le réglage de la tension sur la charge et donc du courant qui la traverse se fait généralement par variation de fréquence, en ajustant la fréquence de résonance du circuit LC pour une fréquence source AC donnée ou, à fréquence de résonance fixée, en variant la fréquence AC. On peut également régler la puissance de sortie en utilisant une commande de type PWM (modulation par largeur d'impulsion).

Cette façon de procéder présente deux types d'inconvénients :

- nécessité d'un circuit de réglage relativement compliqué électroniquement, de type PWM ou VCO (oscillateur contrôlé en tension) ;
- difficulté du filtrage EMI (interférence électromagnétique) lorsque la fréquence varie.

Le brevet américain US-B-6 181 116 propose un régulateur de puissance délivrée par une source AC comprenant un premier circuit résonnant LC série et un deuxième circuit résonnant formé par l'inductance et une deuxième capacité placée en parallèle sur la sortie et destiné à obtenir une tension de sortie plus faible que la tension AC d'entrée, à courant de sortie nul.

Un exemple de convertisseur DC-DC à transistors travaillant à une fréquence de 200 - 300 kHz est donné dans R.L. STEIGERWALD, IEEE Transactions on Industrial Electronics (1984) Vol. IE-31, No. 2. La commutation des transistors crée des signaux carrés qui sont redressés au travers des composants résonnants, ce qui conduit à une tension DC de sortie qui peut être supérieure ou inférieure à la tension DC d'entrée. La forme d'onde sinusoïdale due à l'usage du circuit résonnant permet de réduire les pertes de commutation dans les transistors et d'améliorer le filtrage EMI.

Une discussion de différentes topologies de convertisseurs résonnants en demi-pont (série, parallèle, série-parallèle) est présentée dans R.L. STEIGERWALD, IEEE Transactions on Power Electronics (1988) Vol. 3, No. 2. Le convertisseur série-parallèle permet de s'affranchir des inconvénients du convertisseur série (absence de régulation "à vide", c'est-à-dire pour R = = ∞) et parallèle (courant ne diminuant pas avec la charge et donc pertes de commutation fixes), En outre, le convertisseur série-parallèle peut fonctionner sur une large plage de tensions d'entrée et de charge, tout en assurant une amélioration du transfert d'énergie. Il est donc largement utilisé dans la technologie des alimentations à découpage.

### Buts de l'invention

La présente invention vise à fournir une méthode d'utilisation du convertisseur série-parallèle qui permette de s'affranchir des inconvénients présentés par l'état actuel de la technique.

En particulier, l'invention a pour but de proposer un point de fonctionnement tel que l'impédance vue par la source de tension du convertisseur soit constante quelle que soit la charge variant de 0 à l'infini.

L'invention a pour but complémentaire de proposer un convertisseur à fréquence fixe compatible avec un filtrage EMI simple.

L'invention a encore pour but de proposer un convertisseur pouvant fonctionner en boucle ouverte (donc sans boucle de contre-réaction).

L'invention a encore pour but de fournir un seul ballast électronique convenant pour une famille de tubes TL présentant tous un même courant nominal.

### Principaux éléments caractéristiques de l'invention

La présente invention concerne un procédé pour la mise en oeuvre comme circuit correcteur de charge d'un convertisseur résonnant série-parallèle LCC comprenant une source de tension alternative ($V_{AC}$) de haute fréquence variable, dite fréquence de travail ($f_3$), une inductance (L) et une capacité ($C_1$) en série sur une charge essentiellement résistive (R) et une capacité $C_2$) en parallèle sur ladite charge, caractérisé en ce que la fréquence de travail ($f_3$) est choisie de manière telle que l'impédance d'entrée ($Z_{IN}$) vue par ladite source de tension est constante, quelle que soit la valeur de la charge (R).

L'invention tire un avantage particulièrement surprenant du fait que la fréquence de travail ($f_3$) est ajustée à la valeur :

$$f_{3.0} = \frac{1}{2\pi \sqrt{\dfrac{2LC_1C_2}{C_1+2C_2}}}$$

Selon une première forme d'exécution de l'invention, la tension alternative ($V_{AC}$) de haute fréquence est générée par au moins un commutateur de puissance, de préférence de type thyristor, transistor bipolaire, IGBT ou MOSFET, et de manière générale par tout type d'architecture de convertisseur électronique permettant l'usage d'un correcteur de charge de type LCC.

De préférence, la tension alternative ($V_{AC}$) de haute fréquence est générée par deux commutateurs de puissance ($S_1$, $S_2$), de préférence un montage en demi-pont ou en "push-pull", ou par quatre commutateurs de puissance ($S_1$, $S_2$, $S_3$, $S_4$) en pont complet.

Selon une deuxième forme d'exécution de l'invention , ladite source de tension alternative ($V_{AC}$) de haute fréquence est remplacée par le réseau alternatif de tension 115V ou 230V à la fréquence 50, 60 ou 400 Hz, les composants capacitifs ($C_1$, $C_2$) et inductif (L) étant choisis pour que ladite fréquence de travail ($f_3$) corresponde à la fréquence du réseau.

Selon l'invention, la résistance de charge (R) peut varier de 0 à l'infini et être alimentée en courant continu (DC) par l'intermédiaire d'au moins un élément redresseur, de préférence au moins une diode ou un pont de Graetz, l'élément redresseur étant éventuellement associé à au moins un élément de filtrage selfique et/ou capacitif.

Une caractéristique particulièrement avantageuse de l'invention est de pouvoir maintenir le rapport résistance de charge (R) sur impédance d'entrée ($Z_{IN}$) dans des limites telles que le courant circulant dans la charge reste dans un intervalle de variation de moins de +/- 5%, de préférence +/- 3%.

Toujours selon l'invention, la fréquence de travail ($f_3$) est comprise entre 50 Hz et 5 MHz et est de préférence comprise entre 100 et 300 kHz dans le cas d'un ballast électronique pour tube électroluminescent.

Un deuxième aspect de la présente invention est de proposer un procédé pour la détermination des composants d'un circuit résonnant série-parallèle LCC faisant partie d'un convertisseur ou d'un ballast électronique, fournissant une source de tension alternative ($V_{AC}$), de fréquence de travail donnée ($f_3$), et comprenant une inductance (L) et une capacité ($C_1$) en série sur une charge maximale essentiellement résistive (R) à laquelle est appliquée une tension $V_R$ telle que $V_R < V_{AC}$ et une capacité ($C_2$) en parallèle sur ladite charge, caractérisé par les étapes suivantes :

- on définit l'impédance d'entrée $Z_{IN}$ de l'ensemble constitué par le circuit résonnant LCC et la charge (L) tel que :

$$Z_{IN} = \frac{R}{2}\sqrt{\frac{4V_{AC}^2 - V_R^2}{V_R^2}};$$

- on choisit $C_2$ tel que :

$$C_2 = \frac{1}{2\omega_{osc} Z_{IN}},$$

Où $\omega_{osc} = 2\pi f_3$;
- on choisit $C_1$, de préférence tel que $C_1 > 4C_2$ dans le cas d'un ballast électronique ;
- on déduit L tel que :

$$L = \frac{1 + \omega_{osc} Z_{IN} C_1}{\omega_{osc}^2 C_1}$$

Un troisième aspect de l'invention concerne un ballast pour l'alimentation d'un tube à décharge électroluminescent.

**Brève description des figures**

La figure 1 représente schématiquement le circuit résonnant série-parallèle (LCC) tel que mentionné ci-dessus et servant de base au procédé de l'invention.

La figure 2 représente la courbe de gain en tension en fonction de la fréquence, correspondant au circuit de la figure 1 dans le cas d'une lampe T2 alimentée sous 220V AC.

La figure 3 représente l'impédance du circuit de charge complet pour une série de valeurs de résistance de charge allant de 470 Ω à 8000 Ω (lampe T2 - 240 kHz).

La figure 4 représente la valeur du courant circulant dans la charge (tube T2) en fonction du rapport $R/Z_{IN}$.

Les figures 5.a à 5.c représentent schématiquement trois architectures de convertisseurs en demi-pont compatibles avec la présente invention.

La figure 6 représente schématiquement une architecture de convertisseur en pont complet compatible avec la présente invention.

**Description détaillée de l'invention**

Le principe sous-jacent de la présente invention est décrit ci-après. On définit un nouveau concept basé sur une architecture de charge série-parallèle LCC où tous les composants L, $C_1$, $C_2$, R, interrupteurs, transformateur éventuel, etc. font partie du circuit de charge. Après calcul, le Demandeur a démontré qu'il existe une fréquence particulière telle que l'impédance vue par le convertisseur (source de tension) est constante quelle que soit la valeur d'une charge résistive variant de 0 à l'infini. Cette constatation, et surtout le fait d'en tirer profit au niveau du fonctionnement d'un convertisseur, est tout à fait inattendu(e) pour l'homme de métier de connaissances moyennes, qui se baserait sur les connaissances générales relatives aux convertisseurs et sur les publications de l'état de la technique. En effet, on peut montrer que le gain G = $|V_R/V_{AC}|$ (valeur quadratique moyenne) pour le circuit de la figure 1, en fonction de la fréquence, est donné par l'expression ($\omega = 2\pi f$)

$$G = \frac{\omega R\, C_1}{\sqrt{(1-\omega^2 L C_1)^2 + \omega^2 R^2 (C_1 + C_2 - \omega^2 L C_1 C_2)^2}} \qquad \text{(EQ.3)}$$

Bien que cette formule soit connue de l'homme de l'art (par ex. EQ. 23 dans R.L. STEIGERWALD, IEEE Transactions on Power Electronics (1988) Vol. 3, No. 2), il n'est nulle part fait mention d'une fréquence différente de $f_1$ et $f_2$ et qui serait d'un intérêt particulier pour déterminer le point de fonctionnement du convertisseur.
La valeur de cette fréquence particulière est :

$$f_3 = \frac{1}{2\pi \sqrt{\sqrt{\dfrac{2LC_1C_2}{C_1+2C_2}}}} \qquad \text{(EQ.4)}$$

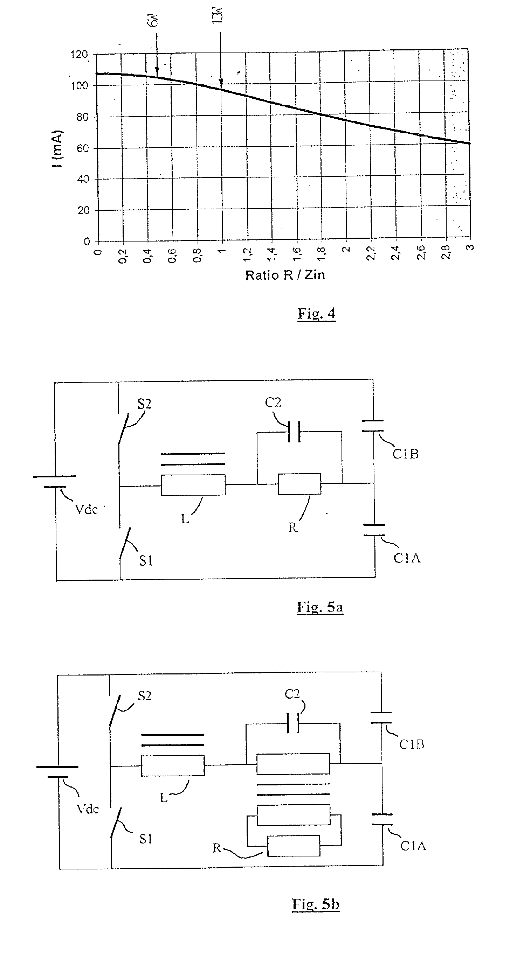

Cette fréquence $f_3$ est située entre $f_1$ et $f_2$ sur la figure 2. Sa valeur dépend du rapport entre les capacités $C_1$ et $C_2$. Cette fréquence est indépendante de R.
L'impédance du circuit de charge complet est donné sur la figure 3. Pour chaque valeur de la charge ($R_1$, $R_2$, $R_3$, etc.), on a une courbe différente d'impédance $Z_{IN}$ en fonction de la fréquence f. Toutes les courbes ont cependant une intersection commune au point correspondant à la fréquence $f_3$ et qui correspond donc à une valeur commune d'impédance d'entrée $Z_{IN}$. On peut montrer que cette valeur de $Z_{IN}$ vaut :

$$Z_{IN} = \frac{1}{4\pi f_3 C_2} \qquad \text{(EQ.5).}$$

On voit que pour un ensemble de valeurs de L, $C_1$ et $C_2$, l'impédance $Z_{IN}$ est totalement indépendante de la charge R. Si l'impédance de $C_2$, en parallèle avec R, vaut quelques fois la valeur de R, alors le courant dans la charge sera à quelques pour cent près identique à celui circulant dans L et $C_1$ (voir figure 4). Le ballast ou l'onduleur se comporte alors comme une alimentation en courant (bien que l'oscillateur soit normalement une alimentation en tension), puisque l'impédance d'entrée est constante.
L'invention comprend également la mise au point d'un procédé de dimensionnement de correcteur de charge tirant avantageusement profit de ces constatations. Le procédé proposé consiste en quatre étapes :

1. Pour une charge R (= $R_{max}$) et une tension $V_R$ inférieure à la tension alternative $V_{AC}$, on définit $Z_{IN}$ tel que :

$$Z_{IN} = \frac{R}{2} \sqrt{\frac{4V_{AC}^2 - V_R^2}{V_R^2}} \qquad \text{(EQ.6)}$$

2. On choisit $C_2$ tel que

$$C_2 = \frac{1}{2\omega_{osc}\, Z_{IN}} \qquad \text{(EQ.7)}$$

correspondant à une fréquence de travail désirée ($\omega_{osc} = 2\pi f_3$). Le circuit va dès lors fonctionner à une fréquence constante. On pourrait ajuster $C_2$ de manière telle que le circuit fonctionne sur un réseau 50 Hz (ou 60 Hz pour les U.S.A.) ou 400 Hz en avionique.
3. On choisit $C_1$. Pour un ballast électronique pour tube TL, le choix préféré de $C_1$ est de 4 à 5 fois $C_2$. Cela permet de donner plus de tension sur $C_2$ à l'allumage du tube.

4. On en déduit :

$$L = \frac{1 + \omega_{osc} Z_{IN} C_1}{\omega_{osc}^2 C_1}$$

(EQ.8)

Pour une charge nominale définie R, on peut donc déterminer les composants L, $C_1$ et $C_2$, tels que le courant $I_R$ soit pratiquement constant dans une large plage de charge variant de 0 à l'infini.

## Description de formes d'exécution préférées de l'invention

Le circuit et la méthode de calcul des composants présentés ci-dessus trouvent facilement leur application aux ballasts électroniques pour tubes fluorescents (TL).
Avantageusement selon l'invention, un seul modèle de circuit est défini pour un type de lampes présentant toutes un courant nominal identique et convient donc pour allumer tous ces tubes TL. Le schéma électrique du ballast correspond au schéma de la figure 1.
On peut également concevoir, selon l'invention un courant constant qui circule dans une charge qui varie, même en utilisant une alimentation secteur 50, 60 ou 400 Hz.

EXEMPLE 1

Considérons le cas d'un fournisseur de tubes TL qui propose une gamme d'environ 50 tubes différents. On peut estimer qu'en général, un ballast de caractéristiques données sert à alimenter en moyenne deux tubes différents.
La présente invention permet d'utiliser un ballast unique notamment pour :

- les tubes TL de type T2 ($\varnothing$ = 2/8") de 6, 8, 11 et 13 watt dont le courant nominal est de 100 mA,
- les tubes TL de type T5 ($\varnothing$ = 5/8") de 4, 6, 8 et 13 watt, ainsi que les nouveaux tubes T5 de faible consommation de 14, 21, 28 et 35 watt, dont le courant nominal est de 150 mA.

A titre d'exemple, le Demandeur a réussi à réduire l'éventail de ballasts nécessaires à 8 modèles pour un fournisseur présentant une gamme de 55 tubes différents.

EXEMPLE 2

L'idée de faire travailler le convertisseur à la fréquence $f_3$ définie ci-dessus n'est pas limitée par le type d'architecture retenu pour générer une source de tension alternative à partir d'une tension continue (DC). On peut ainsi avoir soit :

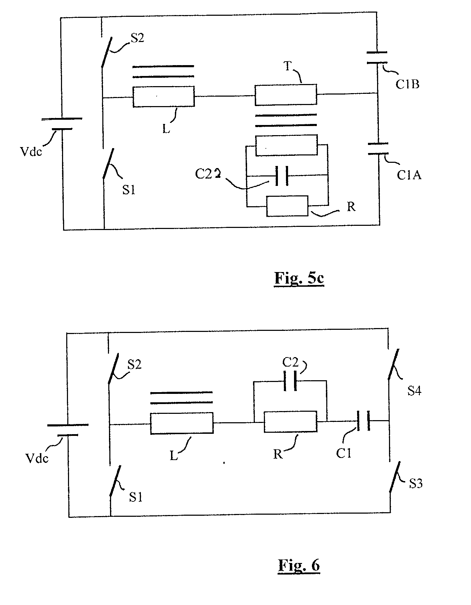

- aucun élément de commutation (voir ci-dessus) ;
- un élément de commutation : convertisseurs "forward", ampli de classe E, etc. ;
- deux éléments de commutation : demi-pont, "push-pull", etc. Le schéma de la figure 5.a présente un version du circuit à deux commutateurs S1 et S2 où $C_1$ a été remplacé par les deux capacités $C_{1A}$ et $C_{1B}$ ($C_{1A}$ = $C_{1B}$ et $C_1$ = 2 x $C_{1A}$). A la figure 5.b, la charge est connectée en parallèle sur $C_2$ via un transformateur ; alternativement, à la figure 5.c, la capacité $C_{22}$ se trouve en parallèle sur la charge au secondaire du transformateur, ce qui donne, ramené au primaire, $C_2 = C_{22}/N^2$, où N est le rapport de transformation $N_p/N_s$ ;
- quatre éléments de commutation : pont complet, etc. (figure 6).

La charge peut aussi requérir l'utilisation de courant continu. La sortie du convertisseur comprendra alors un élément de redressement tel que diode(s), pont de Graetz, etc., et des éléments de filtrage selfiques et/ou capacitifs.
D'autres avantages sont obtenus dans le cadre de la présente invention :

- fonctionnement en générateur de courant avec forme d'onde sinusoïdale pure et facteur de crête minimisé ($\sqrt{2}$) ;

- faible niveau EMI suite à la réduction des harmoniques dans la charge.

Le circuit tel que décrit ci-dessus fonctionne en dessous de la fréquence de résonance $f_2$, ce qui implique que les transistors MOSFET commutent avec des pertes plus ou moins importantes. Il est cependant possible d'adjoindre des éléments additionnels (par ex. une inductance supplémentaire) permettant de rendre selfique la charge vue par les transistors, ce qui implique alors les avantages suivants :

- coupure des transistors à zéro tension permettant des fréquences nominales très élevées et pas de refroidissement complémentaire nécessaire pour les transistors MOSFET ;
- haut rendement ;
- pas de filtrage pour le redressement en pont complet et facteur de puissance pratiquement égal à un.

Des avantages additionnels sont indirectement obtenus grâce à l'utilisation de hautes fréquences :

- faible coût des composants magnétiques, l'inductance L pouvant être une bobine dans l'air ;
- transformateur pouvant être à simple enroulement et câblé PCB ;
- compacité du ballast ;
- faible coût de production puisque tous les composants peuvent être montés en surface.

**Revendications**

1. Procédé pour la mise en oeuvre comme circuit correcteur de charge d'un convertisseur résonnant série-parallèle LCC comprenant une source de tension alternative ($V_{AC}$) de haute fréquence variable, dite fréquence de travail ($f_3$), une inductance (L) et une capacité ($C_1$) en série sur une charge essentiellement résistive (R) et une capacité ($C_2$) en parallèle sur ladite charge, **caractérisé en ce que** la fréquence de travail ($f_3$) est choisie de manière telle que l'impédance d'entrée ($Z_{IN}$) vue par la source de tension est constante, quelle que soit la valeur de la charge (R).

2. Procédé selon la revendication 1,
   **caractérisé en ce que** la fréquence de travail ($f_3$) est ajustée à la valeur :

$$f_{3,0} = \frac{1}{2\pi\sqrt{\dfrac{2LC_1C_2}{C_1+2C_2}}}$$

3. Procédé selon la revendication 1 ou 2, **caractérisé en ce que** la tension alternative ($V_{AC}$) de haute fréquence est générée par au moins un commutateur de puissance, de préférence de type thyristor, transistor bipolaire, IGBT ou MOSFET.

4. Procédé selon la revendication 3, **caractérisé en ce que** la tension alternative ($V_{AC}$) de haute fréquence est générée par tout type d'architecture de convertisseur électronique permettant l'usage d'un correcteur de charge de type LCC.

5. Procédé selon l'une quelconque des revendications précédentes, **caractérisé en ce que** la tension alternative ($V_{AC}$) de haute fréquence est générée par deux commutateurs de puissance ($S_1$, $S_2$), de préférence un montage en demi-pont ou en "push-pull", ou par quatre commutateurs de puissance ($S_1$, $S_2$, $S_3$, $S_4$) en pont complet.

6. Procédé selon la revendication 1, **caractérisé en ce que** la source de tension alternative ($V_{Ac}$) de haute fréquence est remplacée par le réseau alternatif de tension 115V ou 230V à la fréquence 50, 60 ou 400 Hz.

7. Procédé selon la revendication 6, **caractérisé en ce que** les composants capacitifs ($C_1$, $C_2$) et inductif (L) sont choisis pour que la fréquence de travail ($f_3$) corresponde à la fréquence dudit réseau.

8. Procédé selon l'une quelconque des revendications précédentes, **caractérisé en ce que** la résistance de charge (R) peut varier de 0 à l'infini.

9. Procédé selon la revendication 8, **caractérisé en ce que** la résistance de charge (R) est alimentée en courant continu (DC) par l'intermédiaire d'au moins un élément redresseur, de préférence au moins une diode ou un pont de Graetz.

10. Procédé selon la revendication 9, **caractérisé en ce que** l'élément redresseur est associé à au moins un élément de filtrage selfique et/ou capacitif.

**11.** Procédé selon l'une quelconque des revendications précédentes, **caractérisé en ce que** le rapport résistance de charge (R) sur impédance d'entrée ($Z_{IN}$) est maintenu dans des limites telles que le courant circulant dans la charge reste dans un intervalle de variation de moins de +/- 5%, de préférence +/- 3%.

**12.** Procédé selon l'une quelconque des revendications précédentes, **caractérisé en ce que** la fréquence de travail ($f_3$) est comprise entre 50 Hz et 5 MHz et est de préférence comprise entre 100 et 300 kHz dans le cas d'un ballast électronique pour tube électroluminescent.

**13.** Procédé pour la détermination des composants d'un circuit résonnant série-parallèle LCC faisant partie d'un convertisseur ou d'un ballast électronique, fournissant une tension alternative ($V_{AC}$), de fréquence de travail donnée ($f_3$) et comprenant une inductance (L) et une capacité ($C_1$) en série sur une charge maximale essentiellement résistive (R) à laquelle est appliquée une tension $V_R$ telle que $V_R < V_{AC}$ et une capacité ($C_2$) en parallèle sur ladite charge, **caractérisé par** les étapes suivantes :

- on définit l'impédance d'entrée $Z_{IN}$ de l'ensemble constitué par le circuit résonnant LCC et la charge (L) tel que :

$$Z_{IN} = \frac{R}{2} \sqrt{\frac{4 V_{AC}^2 - V_R^2}{V_R^2}} \; ;$$

- on choisit $C_2$ tel que :

$$C_2 = \frac{1}{2\omega_{osc} Z_{IN}} \, ,$$

où $\omega_{osc} = 2\pi f_3$ ;

- on choisit $C_1$, de préférence tel que $C_1 > 4C_2$ dans le cas d'un ballast électronique ;
- on déduit L tel que :

$$L = \frac{1 + \omega_{osc} Z_{IN} C_1}{\omega_{osc}^2 C_1}.$$

**14.** Ballast pour l'alimentation d'un tube à décharge électroluminescent mettant en oeuvre le procédé selon l'une quelconque des revendications précédentes.

Fig. 1

Fig. 2

Fig. 3

Fig. 4

Fig. 5a

Fig. 5b

**Fig. 5c**

**Fig. 6**

## EP 1 343 358 A1

Office européen
des brevets

**RAPPORT DE RECHERCHE EUROPEENNE**

Numéro de la demande

EP 02 44 7034

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | R.W. ERICKSON, D. MAKSIMOVIC: "Fundamentals of Power Electronics" XP001086453 * page 730 - page 733; figure 19.36 * | 1-14 | H05B41/282 |
| A | NELMS R M ET AL: "A COMPARISON OF RESONANT INVERTER TOPOLOGIES FOR HPS LAMP BALLASTS" CONFERENCE RECORD OF THE INDUSTRY APPLICATIONS CONFERENCE IAS ANNUAL MEETING. TORONTO, OCT. 3 - 8, 1993, NEW YORK, IEEE, US, vol. PART 3 MEETING 28, 3 octobre 1993 (1993-10-03), pages 2317-2322, XP000420459 | | |
| A | US 5 003 231 A (PERPER LLOYD J) 26 mars 1991 (1991-03-26) | | |
| A | US 6 150 773 A (RIBARICH THOMAS J ET AL) 21 novembre 2000 (2000-11-21) | | **DOMAINES TECHNIQUES RECHERCHES (Int.Cl.7)** <br><br> H05B |

Le présent rapport a été établi pour toutes les revendications

| Lieu de la recherche | Date d'achèvement de la recherche | Examinateur |
|---|---|---|
| LA HAYE | 26 juillet 2002 | Maicas, J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

**ANNEXE AU RAPPORT DE RECHERCHE EUROPEENNE
RELATIF A LA DEMANDE DE BREVET EUROPEEN NO.**

EP 02 44 7034

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

26–07–2002

| Document brevet cité au rapport de recherche | Date de publication | Membre(s) de la famille de brevet(s) | | Date de publication |
|---|---|---|---|---|
| US 5003231 A | 26–03–1991 | AU<br>CA<br>WO | 5523390 A<br>2031190 A1<br>9012478 A1 | 05–11–1990<br>13–10–1990<br>18–10–1990 |
| US 6150773 A | 21–11–2000 | AUCUN | | |

EPO FORM P0460

Pour tout renseignement concernant cette annexe : voir Journal Officiel de l'Office européen des brevets, No.12/82